# EUROPEAN PATENT SPECIFICATION

(11) **EP 1 696 820 B1**
(45) Date of publication and mention of the grant of the patent: **15.01.2014**
(21) Application number: 04800806.4
(22) Date of filing: 04.11.2004
(51) Int. Cl.: A61D 1/00, A01K 45/00

(54) **BEAK TREATMENT WITH TONGUE PROTECTION**
SCHNABELBEHANDLUNG MIT ZUNGENSCHUTZ
TRAITEMENT POUR BEC DE VOLAILLE, ET PROTECTION SIMULTANÉE DE LA LANGUE

(30) Priority: 06.11.2003 US 702369
(43) Date of publication of application: 06.09.2006
(73) Proprietor: NOVA-TECH ENGINEERING, INC., Willmar, MN 56201-2282 (US)
(72) Inventor: GORANS, Marc, S., Willmar, MN 56201 (US); JOHNSON, Scott, C., Blomkest, MN 56216 (US)
(74) Representative: Vossius & Partner
(86) International application number: PCT/US2004/036974
(87) International publication number: WO 2005/046323

(56) References cited:
- NL-A- 8 802 812
- US-A- 5 651 731

## Description

### BACKGROUND

The beak of a bird is a weapon and a tool for eating. In commercial production, poultry are raised in close proximity to each other. In this environment, young birds may use their beaks for pecking other birds, potentially causing disfigurement, illness, or death. The sharp tip of the beak is the most dangerous part of the beak. In addition, adult poultry may use their beaks as weapons to damage other adult and juvenile poultry. This use of the beak as a weapon causes economic losses for the poultry producer. Accordingly, a portion of the beak is typically removed from poultry to minimize its effectiveness as a weapon.

Previously, debeaking methods were based on the principle of killing all tissue just ahead of the nostril by severing the blood supply and generally destroying the tissue of the beak. This was done through cutting the beak with a blade or by bringing the beak in contact with a hot object to bum through the beak. Although bleeding may be minimized by cauterization, the wound resulting from these processes produced a substantial amount of pain and shock in the bird.

In these prior art processes, imprecise positioning of the beak and ineffectiveness of the method used resulted in several disadvantages. For example, the beak could heal and regenerate if the blood supply to the beak was not completely cut. Furthermore, when the veins are cut close to the nostril, they are large and difficult to seal resulting in problems avoiding infection or bleeding. The prior art method also could induce severe shock and pain to the bird.

U.S. Patent No. 5,651,731 (Gorans et al.) addresses many of these issues. For example, the apparatus and methods described therein provide a more humane method for treating the beaks of poultry because the method is bloodless, induces little or no shock, and minimizes damage to the bird. It did not, however, address the issue of retardation in growth of the lower beak of a bird. In fact, the method and apparatus were specifically designed to avoid treating the lower beak of the bird. Allowing the lower beak to grow without interference may, however, allow some species of birds (e.g., chickens) to scatter significant amounts of food using that lower beak. The scattered food is typically wasted and does not contribute to the nutrition of the bird.

Another issue that may be raised by treating only the upper beak of a bird is that mating behavior may be adversely affected. In some species of birds, e.g., chickens, the male bird typically grasps the female in his beak during mating. If the male's lower beak extends past the upper beak, the male's ability to grasp the female may be inhibited, thereby adversely affecting mating behavior and/or success.

Previous attempts by the inventors to provide methods and apparatus for treating the lower beak may, however, inadvertently damage the tongue of the bird if the bird's tongue is extended into the beak during the beak treatment process. Birds with damaged tongues may experience difficulties in eating, thereby reducing the growth rate of the bird.

### SUMMARY OF THE INVENTION

The present invention provides apparatus and methods for treating the beaks of poultry to prevent further growth by non-contact heating while protecting the birds' tongues. Although it may be desirable that some species of birds retain their lower beaks without any change after beak treatment, it may be more desirable to retard the growth of the lower beak in other species (e.g., chickens). In any event, it is almost always desirable to protect the birds' tongues during any beak treatment process (irregardless of whether the bird's upper and/or lower beaks are being treated).

The beak treatment process involves the delivery of energy to the beak or beaks in amounts sufficient to retard the growth and/or result in erosion of portions of the treated beaks. The energy incident on one of the upper beak or lower beak may be reflected from an energy director (e.g., a reflector) or it may be provided by a separate energy source as described in, e.g., U.S. Patent Application No. 10/346,981 titled APPARATUS AND METHOD FOR UPPER AND LOWER BEAK TREATMENT, filed January 17, 2003 (Attorney Docket No. 294.0012 0101).

Because the rate at which energy is delivered and/or the energy density of the energy delivered while treating beaks may be significant, protection of the birds' tongues may be desired when treating their beak or beaks by the delivery of energy. The present invention provides methods and apparatus for protecting the birds' tongues by pressing inward on the throat of the bird proximate the base of lower beak. Such pressure will typically cause the birds to retract their tongues from the beaks and/or prevent the birds from extending their tongues into the beak. These actions typically and preferably do not cause any long-term significant damage to the birds' tongues and/or throat that would impair their ability to eat.

Advantages of the present invention may include the ability to treat lower beak of a bird with energy that is delivered at a rate and/or density that is higher than would otherwise be safely used if the location of the birds' tongues were not controlled. In other words, without the methods and apparatus of the present invention, the delivery rate and/or density levels may need to be limited to reduce the likelihood that the birds' tongues will be damaged if they are extended into the beak during the treatment process.

When using the methods and apparatus of the present invention, however, the locations of the birds' tongues can be controlled to prevent the birds from extending their tongues into the beak during beak treatment. As a result, higher delivery rates and/or energy density can be used with a reduced chance of inadvertently damaging the birds' tongues.

A potential advantage of using higher energy delivery rates and/or energy density is that the repeatability of the beak treatment process may be improved because the total amount of energy delivered may be increased as compared to processes in which damage to the birds' tongues was a limiting factor. Alternatively, the higher rate of energy delivery and/or energy density alone may improve repeatability (even if the total amount of energy delivered were the same). In other words, the repeatability of the beak treatment process may be at least partially dependent on the energy delivery rate and/or the density of the energy delivered during treatment.

Another potential advantage of using higher energy delivery rates and/or energy density is that the time required to treat the birds' beaks may be reduced as compared to beak treatment processes in which the energy is delivered at a lower rate and/or density. Reduced treatment time may result in a corresponding reduction in any discomfort that may be experienced by the birds during the treatment process.

In one aspect, the present invention provides a method of treating the lower beak of a bird by positioning a bird head in a bird head positioning device, wherein the bird head positioning device has first and second major sides, and a beak receiving aperture formed through the first and second major sides of the bird head positioning device, wherein at least a portion of the lower beak of the bird head protrudes through the beak receiving aperture and is exposed proximate the second major side of the bird head positioning device; pressing inward on the throat of the bird proximate the base of the lower beak, wherein the pressing is directed towards the tongue of the bird; emitting energy from a non-contact energy source; and directing the energy emitted from the non-contact energy source at the second major surface of the bird head positioning device, wherein the energy is incident on the lower beak exposed proximate the second major side of the bird head positioning device while pressing inward on the throat of the bird.

In another aspect, the present invention provides an apparatus for treating the lower beak of a bird, the apparatus including a bird head positioning device having first and second major sides and a beak receiving aperture formed through the first and second major sides, the bird head positioning device adapted to position the head of a bird proximate the first major side, wherein at least a portion of the beak of the bird head protrudes through the beak receiving aperture and is exposed proximate the second major side of the bird head positioning device; a non-contact energy source emitting energy; an energy director directing energy from the non-contact energy source, wherein energy emitted from the non-contact energy source is incident on at least a portion of the lower beak exposed proximate the second major side of the bird head positioning device; and a tongue control protrusion located proximate the bird head positioning device, wherein the tongue control protrusion presses into the throat of the bird proximate the lower beak when the lower beak of the bird head protrudes through the beak receiving aperture.

In another aspect, the present invention provides an apparatus for treating the beak of a bird, the apparatus including a bird head positioning device adapted to position the head of a bird such that at least a portion of the beak of the bird protrudes from a beak receiving aperture of the bird head positioning device; a non-contact energy source emitting energy; an energy director directing energy from the non-contact energy source at the portion of the beak protruding from the beak receiving aperture; and a tongue control protrusion extending into the beak receiving aperture, wherein the tongue control protrusion is located within the beak receiving aperture such that the tongue control protrusion presses into the throat of the bird proximate a lower beak of the bird.

These and other features and advantages of the invention may be described in more detail below with respect to illustrative embodiments of the invention.

### BRIEF DESCRIPTION OF THE DRAWING

FIG. 1 is a cross-sectional view of one bird head positioning device according to the present invention with a bird head located therein.
FIG. 2 is plan view of the first major side of the positioning device of FIG. 1 with the bird's head removed.
FIG. 3 is a cross-sectional view of an alternative bird head positioning device.
FIG. 4 is a cross-sectional view of another alternative bird head positioning device.

### DETAILED DESCRIPTION OF ILLUSTRATIVE EMBODIMENTS OF THE INVENTION

In the following detailed description of illustrative embodiments, reference is made to the accompanying drawings that form a part hereof, and in which are shown, by way of illustration, specific embodiments in which the invention may be practiced. It is to be understood that other embodiments may be utilized and structural changes may be made without departing from the scope of the present invention. Furthermore, like reference numbers denote like features in the different figures.

The methods and apparatus of the present invention can be used in any suitable system in which the upper and/or lower beaks of live poultry are treated to retard and/or prevent growth of the beaks. Various beak treatment systems may be described in, e.g., U.S. Patent 5,651,731 (Gorans et al.) and U.S. Patent Application No. 10/346,981 titled APPARATUS AND METHOD FOR UPPER AND LOWER BEAK TREATMENT, filed January 17, 2003 (Attorney Docket No. 294.0012 0101).

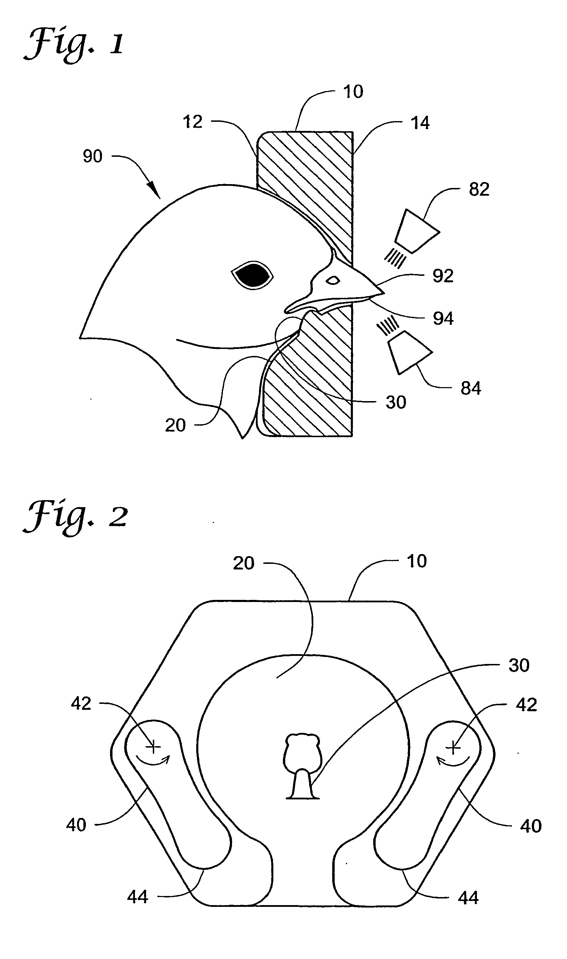

Referring to FIGS. 1 & 2, the apparatus of the present invention includes a head positioning device 10 with a first major side 12 and a second major side 14. A beak receiving aperture 20 is formed through the first and second major sides 12 and 14. The beak receiving aperture 20 may preferably be sized and shaped to receive a portion of the bird's head 90 as shown in FIG. 1 to facilitate retention of the bird's head and accurate positioning of both the upper beak 92 and the lower beak 94 within the beak receiving aperture 20.

When a bird head 90 is positioned in the beak receiving aperture as depicted in FIG. 1, at least a portion of the upper beak 92 and/or lower beak 94 is/are exposed proximate the second major side 14 of the head positioning device 10. It may be preferred that a portion of the upper beak 92 and a portion of the lower beak 94 be exposed such that both the upper beak 92 and the lower beak 94 can be treated at the same time. In some instances, however, only the upper beak 92 or the lower beak 94 may be exposed at any given time.

Also depicted in FIG. 1 are non-contact energy emitters 82 and 84 that preferably deliver energy to the upper beak 92 and the lower beak 94 in amounts sufficient to retard or prevent the growth of the beaks. The non-contact energy emitters 82 and 84 are preferably operably connected to a "non-contact energy source" that is capable of heating the beak of a live bird without physical contact of a solid object such as a heated wire, heated blade, etc. Examples of suitable non-contact energy sources include, but are not limited to, lasers, bulbs emitting infrared radiation, heated fluids, etc.

Although two energy emitters 82 and 84 are depicted in FIG. 1, they may be connected to a common non-contact energy source or they may each be powered by a separate non-contact energy source. In another alternative, the energy emitter 84 delivering energy to the lower beak 94 may be a reflector or other energy director as described in, e.g., U.S. Patent Application No. 10/346,981 titled APPARATUS AND METHOD FOR UPPER AND LOWER BEAK TREATMENT, filed January 17, 2003 (Attorney Docket No. 294.00120101).

The energy emitters 82 and 84 may radiate electromagnetic energy, where "electromagnetic energy" includes energy with wavelengths/frequencies suitable for delivering sufficient energy by radiation to the beak of a bird to effect thermal beak treatment as discussed herein. As such, it may be preferred that the electromagnetic energy be within the visible spectrum, the infrared spectrum, or a combination of the visible and infrared spectrums (although electromagnetic energy outside of those spectrums may be used if sufficient energy can be delivered to the beak via radiation to accomplish thermal beak treatment).

Alternatively, the energy emitters may deliver energy to the beak or beaks by convection. Regardless of the type of energy or its delivery mechanism, the energy should penetrate through the outer layers of the beak to the inner layers, killing a portion of the beak tissue thus exposed to the radiated electromagnetic energy and destroying the ability of the soft tissues of the inner beak to develop into hard tissue.

The head positioning device 10 includes a tongue control protrusion 30 located within the beak receiving aperture 20. The tongue control protrusion 30 is positioned such that, when a bird head 90 is positioned in the beak receiving aperture 20 as depicted, the tongue control protrusion 30 presses inward on the throat of the bird 90 proximate the base of the lower beak 94. Pressing inward on the throat of the bird in that location protects the tongue of the bird 90 during a beak treatment process in which energy is directed at the upper and/or lower beaks 92 and 94 of the bird.

The tongue is protected because, if the bird's tongue is extended towards the tip of the beak, the pressure provided by the tongue control protrusion 30 causes the bird 90 to withdraw its tongue away from the tip of the beak. If the bird's tongue is already retracted (i.e., withdrawn from the tip of the beak) when the bird's head 90 is positioned within the beak receiving aperture 20, the pressure provided by the tongue control protrusion 30 preferably prevents or at least restricts the bird from extending its tongue towards the tip of the beak.

The exact position of the tongue control protrusion 30, its precise shape and other variables are dependent on a variety of factors such as the type of poultry to be treated (e.g., chickens, turkeys, ducks, etc.), the age of the poultry (older birds will typically be larger), etc. It may be preferred that the tongue control protrusion 30 does not deform the throat of the bird such that its respiration is adversely impaired during the beak treatment process.

Another feature of the tongue control protrusion 30 that may be adjusted based on the factors listed above is the distance by which the tongue control protrusion 30 extends into the beak receiving aperture 20. Again, the distance by which the tongue control protrusion 30 extends into the beak receiving aperture 20 is dependent on a variety of factors such as the type of poultry to be treated (e.g., chickens, turkeys, ducks, etc.), the age of the poultry (older birds will typically be larger), etc.

Referring to FIG. 2 (a plan view of the first major side 12 of the head positioning device 10), a pair of retaining arms 40 are preferably provided on the head positioning device 10 to retain the bird's head within the beak receiving aperture 20. It may be preferred that the retaining arms 40 rotate about points 42 (in the plane of the paper on which FIG. 2 is located). When rotated inward as indicated by the arrows proximate points 42, the ends 44 of the retaining arms 40 are located behind the bird's neck, preventing the bird from removing its head 90 from the beak receiving aperture 20. The retaining arms 40 preferably urge the bird's head 90 into position within the beak receiving aperture 20, such that the tongue control protrusion 30 can apply the desired pressure to the bird as discussed herein. Similar retaining arms are depicted in, e.g., U.S. Patent 5,651,731 (Gorans et al.) and U.S. Patent Application No. 10/346,981 titled APPARATUS AND METHOD FOR UPPER AND LOWER BEAK TREATMENT, filed January 17, 2003 (Attorney Docket No. 294.0012 0101). In those documents, the retaining arms 40 of the present invention are referred to as "skin bunchers."

The tongue control protrusion 30 of FIGS. 1 & 2 is an example of a fixed tongue control protrusion, i.e., the tongue control protrusion 30 is fixed within the beak receiving aperture 20. For example, the tongue control protrusion 30 may be molded into the head positioning device 10 if the head positioning device 10 is manufactured of a moldable material (e.g., plastic, etc.). Alternatively, if the head positioning device 10 is, for example, machined from metal, the tongue control protrusion 30 may be formed in the head positioning device 10 as machined. In another alternative, the tongue control protrusion 30 may be attached to a head positioning device 10 after the head positioning device 10 is formed. In that example, the tongue control protrusion 30 may be attached by adhesives, mechanical connectors, etc.

The tongue control protrusion 30 may be made of rigid materials or it may be made of, e.g., silicone or some other suitable material or materials that exhibit resiliency and may elastically deform in response to an applied force. In another alternative, the tongue control protrusion 30 may be made of a combination of rigid and resilient materials (e.g., a rigid core coated with a resilient material)..

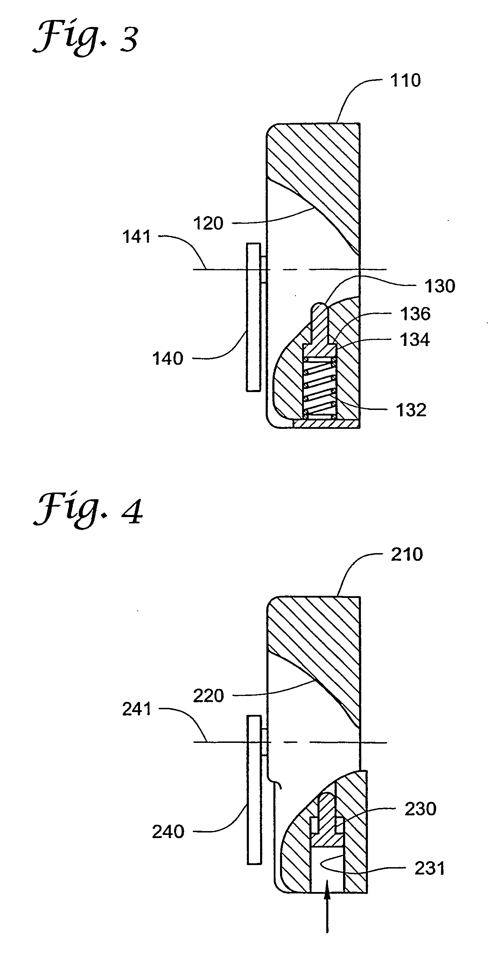

FIG. 3 is a cross-sectional view of an alternative head positioning device 110 that is, in many respects, similar to the head positioning device 10 of FIGS. 1 & 2. The primary difference is, however, that the tongue control protrusion 130 is not fixed within the beak receiving aperture 120. As seen in FIG. 3, the tongue control protrusion 130 is biased upwards into the beak receiving aperture 120 by a resilient member 132. The resilient member 132 may be any resilient, compressible article such as, e.g., a coil spring, elastomeric plug/bushing, leaf spring, etc. The travel of the tongue control protrusion 130 into the beak receiving aperture 120 is limited by the flange 134 that rests against shoulder 136 in the passageway in which the tongue control protrusion 130 travels.

Because the tongue control protrusion 130 is biased into the beak receiving aperture 120 by resilient member 132, the tongue control protrusion 130 may move downward (towards the resilient member 132) while a bird is being inserted into the beak receiving aperture 120. After the bird is located within the beak receiving aperture 120, the tongue control protrusion 130 may move upwards (into the beak receiving aperture 120) when the bird is in position within the beak receiving aperture 120. By moving upwards, the tongue control protrusion 130 provides the desired pressure on the bird to control movement of the bird's tongue.

The use of a resilient member 132 to bias the tongue control protrusion 130 into the beak receiving aperture 120 also provides the ability to adjust the force that the tongue control protrusion 130 can deliver to the bird. For example, the spring constant of the resilient member 132 may be selected to increase or decrease the force or pressure that the tongue control protrusion 130 delivers to the bird. As a result, the force that may be applied to a bird by the tongue control protrusion 130 may be limited by the deflection caused in the resilient member 132.

Also depicted in FIG. 3 is a retaining arm 140 mounted for rotation about axis 141 to retain a bird's head within the beak receiving aperture 120.

FIG. 4 depicts another alternative mechanism in which the tongue control protrusion 230 is not fixed within the beak receiving aperture 220 of head positioning device 210. The tongue control protrusion 230 is mounted such that it can move within the bore 231. The tongue control protrusion 230 may be moved directly by a motive force developed using pressurized fluids (with appropriate seals), electromagnetically, mechanically (using, e.g., a screw drive, rack and pinion, etc.). In another alternative, the tongue control protrusion 230 may be moved by a piston provided within bore 231 to force the tongue control protrusion 230 upwards into the beak receiving aperture 220.

In an apparatus in which the tongue control protrusion 230 can be moved, it may be preferable to withdraw the tongue control protrusion 230 from the beak receiving aperture 220 to facilitate positioning of the bird's head in the beak receiving aperture 220. After the bird's head is in position within the beak receiving aperture 220, the tongue control protrusion 230 may be moved back into the beak receiving aperture 220 where it can apply pressure as desired to the bird to control the bird's tongue during the beak treatment process. After the beak treatment process is complete, it may be desirable to again withdraw the tongue control protrusion 230 from the beak receiving aperture 220. Withdrawing the tongue control protrusion 230 may increase the comfort of the bird and/or facilitate removal of the bird's head from the beak receiving aperture.

Also depicted in FIG. 4 is a retaining arm 240 mounted for rotation about axis 241 to retain a bird's head within the beak receiving aperture 220.

In either of the embodiments depicted in FIGS. 3 & 4, the tongue control protrusion 130/230 may be manufactured of rigid materials, resilient compressible materials (e.g., elastomeric material such as, e.g., silicone, rubber, etc.), or combinations of rigid and resilient, compressible materials.

It should be understood that this invention is not intended to be unduly limited by the illustrative embodiments set forth herein and that such embodiments are presented by way of example only, with the scope of the invention intended to be limited only by the claims.

## Claims

1. An apparatus for treating the lower beak of a bird, the apparatus comprising a bird head positioning device, a non-contact energy source emitting energy and an energy director, **characterised in that** the apparatus further comprises a tongue control protrusion (30, 130, 230) located proximate the bird head positioning device (10, 110, 210), wherein the tongue control protrusion (30, 130, 230) presses into the throat of the bird proximate the lower beak (94) when the lower beak (44) of the bird head protrudes through the beak receiving aperture (20, 120, 220), wherein
the bird head positioning device (10, 110, 210) comprises first (12) and second (14) major sides and a beak receiving aperture (20, 120, 220) formed through the first (12) and second (14) major sides, the bird head positioning device (10, 110, 210) adapted to position the head of a bird proximate the first major side (12), wherein at least a portion of the lower beak (44) of the bird head protrudes through the beak receiving aperture (20, 120, 220) and is exposed proximate the second major side (14) of the bird head positioning device (10, 110, 210), and wherein the energy director directs energy from the non-contact energy source,
wherein energy emitted from the non-contact energy source is incident on at least a portion of the lower beak exposed proximate the second major side (14) of the bird head positioning device.

2. An apparatus according to claim 1, wherein the tongue control protrusion (30, 130, 230) is fixedly mounted relative to the beak receiving aperture (20, 120, 220) of the bird head positioning device (10, 110, 210).

3. An apparatus according to claim 1, wherein the tongue control protrusion (130, 230) is movably mounted relative to the bird head positioning device (110, 210), wherein the position of the tongue control protrusion (130, 230) relative to the beak receiving aperture (120, 220) is adjustable when the lower beak (94) of the bird head protrudes through the beak receiving aperture (120, 220).

4. An apparatus according to claim 1 or 3, further comprising a resilient member biasing the tongue control protrusion (130, 230) into a position in which the tongue control protrusion (130, 230) presses into the throat of the bird proximate the lower beak (94) when the lower beak (94) of the bird head protrudes through the beak receiving aperture (120, 220).

5. A method of treating the lower beak of a bird, **characterized in that** the method comprises:
positioning a bird head in a bird head positioning device, wherein the bird head positioning device comprises first and second major sides, and a beak receiving aperture formed through the first and second major sides of the bird head positioning device, wherein at least a portion of the lower beak of the bird head protrudes through the beak receiving aperture and is exposed proximate the second major side of the bird head positioning device;
pressing inward on the throat of the bird proximate the base of the lower beak, wherein the pressing is directed towards the tongue of the bird;
emitting energy from a non-contact energy source; and
directing the energy emitted from the non-contact energy source at the second major surface of the bird head positioning device, wherein the energy is incident on the lower beak exposed proximate the second major side of the bird head positioning device while pressing inward on the throat of the bird.

6. A method according to claim 5, wherein the pressing is performed while the bird head is positioned in the bird head positioning device.

7. A method according to claim 5, wherein the pressing is performed after the bird head is positioned in the bird head positioning device.

8. A method according to any of the claims 5 to 7, further comprising adjusting a force used to perform the pressing.

9. A method according to any of the claims 5 to 8, further comprising limiting a force used to perform the pressing

10. A method according to any of the claims 5 to 9, wherein the bird head positioning device comprises a tongue control protrusion, wherein the tongue control protrusion presses into the throat of the bird proximate the base of the lower beak.

11. A method according to claim 10, further comprising adjusting a force by which the tongue control protrusion presses into the throat of the bird.

12. A method according to claim 10 or 11, wherein the tongue control protrusion extends into the beak receiving aperture.

13. A method according to claim 12, further comprising adjusting a distance by which the tongue control protrusion extends into the beak receiving aperture.

14. A method according to claim 12 or 13, wherein the tongue control protrusion extends into the beak receiving aperture by a fixed distance.

## Patentansprüche

1. Vorrichtung zur Behandlung des Unterschnabels eines Vogels, wobei die Vorrichtung eine Vogelkopf-Positioniervorrichtung, eine kontaktfreie Energiequelle, die Energie abstrahlt, und eine Energieleitsonde aufweist, **dadurch gekennzeichnet, dass** die Vorrichtung ferner einen Zungenkontrollvorsprung (30, 130, 230) aufweist, der nahe der Vogelkopf-Positioniervorrichtung (10, 110, 210) liegt, wobei der Zungenkontrollvorsprung (30, 130, 230) in die Kehle des Vogels nahe dem Unterschnabel (94) drückt, wenn der Unterschnabel (94) des Vogelkopfs durch die Schnabelaufnahmeöffnung (20, 120, 220) vorsteht, wobei
die Vogelkopf-Positioniervorrichtung (10, 110, 210) eine erste (12) und eine zweite Hauptseite (14) sowie eine durch die erste (12) und zweite Hauptseite (14) gebildete Schnabelaufnahmeöffnung (20, 120, 220) aufweist, wobei die Vogelkopf-Positioniervorrichtung (10, 110, 210) geeignet ist, den Kopf eines Vogels nahe der ersten Hauptseite (12) zu positionieren, wobei mindestens ein Abschnitt des Unterschnabels (94) des Vogelkopfs durch die Schnabelaufnahmeöffnung (20, 120, 220) vorsteht und nahe der zweiten Hauptseite (14) der Vogelkopf-Positioniervorrichtung (10, 110, 210) freiliegt, und wobei die Energieleitsonde Energie von der kontaktfreien Energiequelle leitet, wobei von der kontaktfreien Energiequelle abgestrahlte Energie auf mindestens einen Abschnitt des Unterschnabels auftrifft, der nahe der zweiten Hauptseite (14) der Vogelkopf-Positioniervorrichtung freiliegt.

2. Vorrichtung nach Anspruch 1, wobei der Zungenkontrollvorsprung (30, 130, 230) relativ zur Schnabelaufnahmeöffnung (20, 120, 220) der Vogelkopf-Positioniervorrichtung (10, 110, 210) feststehend angeordnet ist.

3. Vorrichtung nach Anspruch 1, wobei der Zungenkontrollvorsprung (130, 230) relativ zur Vogelkopf-Positioniervorrichtung (110, 210) beweglich angeordnet ist, wobei die Position des Zungenkontrollvorsprüngs (130, 230) relativ zur Schnabelaufnahmeöffnung (120, 220) einstellbar ist, wenn der Unterschnabel (94) des Vogelkopfs durch die Schnabelaufnahmeöffnung (120, 220) vorsteht.

4. Vorrichtung nach Anspruch 1 oder 3, ferner mit einem nachgiebigen Bauteil, das den Zungenkontrollvorsprung (130, 230) in eine Position vorspannt, in der der Zungenkontrollvorsprung (130, 230) in die Kehle des Vogels nahe dem Unterschnabel (94) drückt, wenn der Unterschnabel (94) des Vogelkopfs durch die Schnabelaufnahmeöffnung (120, 220) vorsteht.

5. Verfahren zur Behandlung des Unterschnabels eines Vogels, **dadurch gekennzeichnet, dass** das Verfahren aufweist:
Positionieren eines Vogelkopfs in einer Vogelkopf-Positioniervorrichtung, wobei die Vogelkopf-Positioniervorrichtung eine erste und eine zweite Hauptseite sowie eine Schnabelaufnahmeöffnung aufweist, die durch die erste und zweite Hauptseite der Vogelkopf-Positioniervorrichtung gebildet ist, wobei mindestens ein Abschnitt des Unterschnabels des Vogelkopfs durch die Schnabelaufnahmeöffnung vorsteht und nahe der zweiten Hauptseite der Vogelkopf-Positioniervorrichtung freiliegt;
Drücken nach innen auf die Kehle des Vogels nahe der Basis des Unterschnabels, wobei das Drücken zur Zunge des Vogels gerichtet ist;
Abstrahlen von Energie von einer kontaktfreien Energiequelle; und
Leiten der von der kontaktfreien Energiequelle abgestrahlten Energie auf die zweite Hauptfläche der Vogelkopf-Positioniervorrichtung, wobei die Energie auf den Unterschnabel auftrifft, der nahe der zweiten Hauptseite der Vogelkopf-Positioniervorrichtung freiliegt, während nach innen auf die Kehle des Vogels gedrückt wird.

6. Verfahren nach Anspruch 5, wobei das Drücken durchgeführt wird, während der Vogelkopf in der Vogelkopf-Positioniervorrichtung positioniert ist.

7. Verfahren nach Anspruch 5, wobei das Drücken durchgeführt wird, nachdem der Vogelkopf in der Vogelkopf-Positioniervorrichtung positioniert ist.

8. Verfahren nach einem der Ansprüche 5 bis 7, das ferner aufweist: Einstellen einer Kraft, die aufgewendet wird, um das Drücken durchzuführen.

9. Verfahren nach einem der Ansprüche 5 bis 8, das ferner aufweist: Begrenzen einer Kraft, die aufgewendet wird, um das Drücken durchzuführen.

10. Verfahren nach einem der Ansprüche 5 bis 9, wobei die Vogelkopf-Positioniervorrichtung einen Zungenkontrollvorsprung aufweist, wobei der Zungenkontrollvorsprung in die Kehle des Vogels nahe der Basis des Unterschnabels drückt.

11. Verfahren nach Anspruch 10, das ferner aufweist: Einstellen einer Kraft, mit der der Zungenkontrollvorsprung in die Kehle des Vogels drückt.

12. Verfahren nach Anspruch 10 oder 11, wobei sich der Zungenkontrollvorsprung in die Schnabelaufnahmeöffnung erstreckt.

13. Verfahren nach Anspruch 12, das ferner aufweist: Einstellen einer Entfernung, mit der sich der Zungenkontrollvorsprung in die Schnabelaufnahmeöffnung erstreckt.

14. Verfahren nach Anspruch 12 oder 13, wobei sich der Zungenkontrollvorsprung mit einer festen Entfernung in die Schnabelaufnahmeöffnung erstreckt.

## Revendications

1. Appareil pour le traitement de la mandibule inférieure du bec d'un oiseau, ledit appareil comprenant un dispositif de positionnement de la tête d'un oiseau, une source d'énergie exempte de contact émettant de l'énergie, et un guide d'énergie, **caractérisé en ce que** ledit appareil comprend en outre
une saillie (30, 130, 230) de commande de la langue située à proximité du dispositif de positionnement (10, 110, 210) de tête d'oiseau, ladite saillie (30, 130, 230) de commande de la langue exerçant une pression sur la gorge de l'oiseau à proximité de la mandibule inférieure (94) du bec quand la mandibule inférieure (94) du bec de tête de l'oiseau dépasse de l'ouverture de réception (20, 120, 220) du bec, et
le dispositif de positionnement (10, 110, 210) de tête d'oiseau comprenant un premier (12) et un deuxième (14) côtés principaux et une ouverture de réception (20, 120, 220) du bec formée dans le premier (12) et le deuxième (14) côtés principaux, ledit dispositif de positionnement (10, 110, 210) de tête d'oiseau étant prévu pour positionner la tête d'un oiseau à proximité du premier (12) côté principal, au moins une partie de la mandibule inférieure (94) du bec de tête de l'oiseau dépassant de l'ouverture de réception (20, 120, 220) du bec et étant exposée à proximité du deuxième (14) côté principal du dispositif de positionnement (10, 110, 210) de tête d'oiseau ; et
le guide d'énergie conduisant l'énergie de la source d'énergie exempte de contact, l'énergie émise par la source d'énergie exempte de contact étant incidente sur au moins une partie de la mandibule inférieure du bec exposée à proximité du deuxième (14) côté principal du dispositif de positionnement de tête d'oiseau.

2. Appareil selon la revendication 1, où la saillie (30, 130, 230) de commande de la langue est fixe par rapport à l'ouverture de réception (20, 120, 220) du bec du dispositif de positionnement (10, 110, 210) de tête d'oiseau.

3. Appareil selon la revendication 1, où la saillie (130, 230) de commande de la langue est mobile par rapport au dispositif de positionnement (110, 210) de tête d'oiseau, la position de la saillie (130, 230) de commande de la langue par rapport à l'ouverture de réception (120, 220) du bec étant réglable quand la mandibule inférieure (94) du bec de tête de l'oiseau dépasse de l'ouverture de réception (120, 220) du bec.

4. Appareil selon la revendication 1 ou la revendication 3, comprenant en outre un élément élastique déplaçant la saillie (130, 230) de commande de la langue vers une position où la saillie (130, 230) de commande de la langue exerce une pression sur la gorge de l'oiseau à proximité de la mandibule inférieure (94) du bec quand la mandibule inférieure (94) du bec de tête de l'oiseau dépasse de l'ouverture de réception (20, 120, 220) du bec.

5. Procédé de traitement de la mandibule inférieure du bec d'un oiseau, **caractérisé en ce que** ledit procédé comprend les étapes suivantes :
positionnement d'une tête d'oiseau dans un dispositif de positionnement de tête d'oiseau, ledit dispositif de positionnement de tête d'oiseau comprenant un premier et un deuxième côtés principaux, et une ouverture de réception du bec formée dans le premier et le deuxième côtés principaux du dispositif de positionnement de tête d'oiseau, au moins une partie de la mandibule inférieure du bec de tête de l'oiseau dépassant de l'ouverture de réception du bec et étant exposée à proximité du deuxième côté principal du dispositif de positionnement de tête d'oiseau ;
l'application d'une pression sur la gorge de l'oiseau à proximité de la base de la mandibule inférieure du bec, la pression étant dirigée vers la langue de l'oiseau ;
l'émission d'énergie par une source d'énergie exempte de contact ; et
la conduction de l'énergie émise par la source d'énergie exempte de contact vers la deuxième surface principale du dispositif de positionnement de tête d'oiseau, l'énergie étant incidente sur la mandibule inférieure du bec exposée à proximité du deuxième côté principal du dispositif de positionnement de tête d'oiseau par application d'une pression sur la gorge de l'oiseau.

6. Procédé selon la revendication 5, où la pression est appliquée par positionnement de la tête de l'oiseau dans le dispositif de positionnement de tête d'oiseau.

7. Procédé selon la revendication 5, où la pression est appliquée après positionnement de la tête de l'oiseau dans le dispositif de positionnement de tête d'oiseau.

8. Procédé selon l'une des revendications 5 à 7, comprenant en outre le réglage d'une force appliquée pour réaliser la pression.

9. Procédé selon l'une des revendications 5 à 8, comprenant en outre la limitation d'une force appliquée pour réaliser la pression.

10. Procédé selon l'une des revendications 5 à 9, où le dispositif de positionnement de tête d'oiseau comprend une saillie de commande de la langue, ladite saillie de commande de la langue appliquant une pression sur la gorge de l'oiseau à proximité de la base de la mandibule inférieure du bec.

11. Procédé selon la revendication 10, comprenant en outre le réglage d'une force avec laquelle la saillie de commande de la langue applique une pression sur la gorge de l'oiseau.

12. Procédé selon la revendication 10 ou la revendication 11, où la saillie de commande de la langue s'étend dans l'ouverture de réception du bec.

13. Procédé selon la revendication 12, comprenant en outre le réglage d'une longueur d'extension de la saillie de commande de la langue dans l'ouverture de réception du bec.

14. Procédé selon-la revendication 12 ou la revendication 13, où la longueur d'extension de la saillie de commande de la langue dans l'ouverture de réception du bec est fixe.
